# EUROPÄISCHE PATENTSCHRIFT

(11) **EP 3 102 510 B1**
(45) Veröffentlichungstag und Bekanntmachung des Hinweises auf die Patenterteilung: **27.11.2019**
(21) Anmeldenummer: 15817756.8
(22) Anmeldetag: 16.12.2015
(51) Int. Cl.: B65G 39/09, B65G 23/08, B65G 13/075

(54) **ROLLE MIT INNENBAUGRUPPE**
ROLLER WITH INTERNAL ASSEMBLY
ROULEAU POURVU D'UN ENSEMBLE INTÉRIEUR

(30) Priorität: 16.12.2014 DE 102014018769
(43) Veröffentlichungstag der Anmeldung: 14.12.2016
(73) Patentinhaber: Interroll Holding AG, 6592 Sant' Antonino (CH)
(72) Erfinder: DUDEK, Siegmund, 52525 Heinsberg (DE)
(74) Vertreter: Müller-Boré & Partner Patentanwälte PartG mbB
(86) Internationale Anmeldenummer: PCT/EP2015/002538
(87) Internationale Veröffentlichungsnummer: WO 2016/096134

(56) Entgegenhaltungen:
- WO-A1-84/03685
- DE-A1- 1 556 577
- FR-A- 1 351 055
- FR-A- 1 601 324
- JP-A- S53 104 979
- US-A- 3 899 063
- US-A- 6 131 717
- US-B1- 6 354 424
- US-B2- 9 676 553

## Beschreibung

Die Erfindung betrifft eine Rolle mit einer Innenbaugruppe und eine Förderanlage. Förderanlagen weisen regelmäßig Gestelle auf, an denen Rollen befestigt sind, die zum Fördern von Gütern dienen. Dabei können Güter auf den sich drehenden Rollen transportiert werden.

Um den Transport der Güter auf der Förderanlage zu beeinflussen, können einige oder alle der Rollen im Rolleninneren mit einer Bremse und/oder einem Antrieb versehen sein. Eine solche im Inneren der Rolle angeordnete Innenbaugruppe dient zur Kraftübertragung auf den Rollenmantel der Rolle, um die Drehgeschwindigkeit der Rolle um ihre eigene Längsachse zu beeinflussen.

Dokument DE 1 556 557 wird als nächstliegender Stand der Technik angesehen und betrifft eine Bremsrolle für Rollenbahnen. Die Bremsrolle weist einen Rollenmantel auf, der an einer Stirnwand über ein Wälzlager an einer Rollenachse gelagert ist. Die Stirnwand weist eine Innenverzahnung auf, die in ein Getriebe mit Zahnrädern eingreift.

Dokument US 2005/0121296 A1 betrifft eine Förderrolle mit einer Achse und einem um die Achse drehbaren Rollenmantel. Die Förderrolle weist eine Bremsvorrichtung auf zum Reduzieren der Drehung des Rollenmantels um die Achse. Die Bremsvorrichtung ist so vorgespannt, dass sich die Bremswirkung nur bei einem deaktivierten Auslöser entfaltet. Der Auslöser kann dann aktiviert sein, wenn ein Motor der Förderanlage aktiviert ist.

Aus der DE 10 2012 003 499 A1 ist eine Rolle mit einer Wirbelstrombremse als Innenbaugruppe bekannt. Die im Inneren des Rollenmantels angeordnete Wirbelstrombremse ist an einem Längsende der Rolle mit dem Rollenboden verpresst, über den ein Kraftübertrag von der Wirbelstrombremse auf den Rollenmantel erfolgt. Die Rolle weist eine zwischen der Wirbelstrombremse und dem Rollenmantel angeordnete rohrförmige Abschirmung auf, die das Ausbilden von Wirbelströmen im Rollenmantel abschwächen soll. Deswegen ist die Wirbelstrombremse nur über den am Längsende der Rollen angeordneten Rollenboden mit dem Rollenmantel gekoppelt.

Auf die Rolle wirken verschiedene Kräfte, wie zum Beispiel eine Bremskraft, die von der Wirbelstrombremse über den Rollenboden an den Rollenmantel übertragen wird, die Gravitationskraft, die insbesondere bei langen Rollen zum Durchhängen einer Mittelstange und/oder des Rollenmantels führen kann, Reibungskräfte, von der Rollgeschwindigkeit abhängige Fliehkräfte, usw. Dadurch kann es bei solchen Rollen mit Innenbaugruppen zu Abnutzungserscheinungen und Materialermüdungen kommen.

Der Erfindung liegt die Aufgabe zugrunde, eine verbesserte Rolle mit Innenbaugruppe bereitzustellen, insbesondere eine höher belastbare Rolle.

Die Erfindung wird durch die Gegenstände der unabhängigen Ansprüche gelöst. Bevorzugte Ausführungsformen sind die Gegenstände der abhängigen Ansprüche.

Ein erster Aspekt betrifft eine Rolle nach dem Anspruch 1 mit einer ortsfesten Stange, die entlang einer Längsachse der Rolle angeordnet ist. Die Rolle weist weiterhin einen um die Stange herum angeordneten rohrförmigen Rollenmantel auf, sowie zumindest eine an der Stange angeordnete Lagerbaugruppe, über die der Rollenmantel drehbar um die Längsachse der Rolle gelagert ist. Die Rolle weist zudem eine Innenbaugruppe auf, die innerhalb des Rollenmantels an der Stange angeordnet ist und die über die Lagerbaugruppe so mit dem Rollenmantel gekoppelt ist, dass bei Drehung des Rollenmantels um die Längsachse ein Kraftaustausch (bzw. eine Kraftkopplung bzw. ein Kraftübertrag) erfolgt zwischen der Innenbaugruppe und dem Rollenmantel. Dabei ist die Innenbaugruppe mit einem der Lagerbaugruppe zugewandten Ende so an die Lagerbaugruppe gekoppelt, dass die Innenbaugruppe relativ zu der Lagerbaugruppe verkippbar ist.

Die ortsfeste Stange kann dabei in einem Gestell befestigt sein. Die ortsfeste Stange kann zum Beispiel einen runden oder eckigen Querschnitt aufweisen, insbesondere einen hexaederförmigen Querschnitt, an dem sowohl die Lagerbaugruppe als auch die Innenbaugruppe montiert sein können. Ortsfest bedeutet, dass die Stange selber dazu ausgebildet und vorgesehen ist, nicht um die Längsachse drehbar, sondern starr befestigt zu werden, also z.B. mit dem Gestell verschraubt zu werden. Dazu kann die Stange entsprechende Gewinde aufweisen. Die übrigen ortsfesten Bauteile der Rolle können ihrerseits starr mit der Stange verbunden sein, beispielsweise wiederum durch eine Schraubverbindung.

Die Rolle ist im Wesentlichen zylinderförmig ausgebildet, wobei der Rollenmantel die Rolle als Zylindermantel radial nach außen begrenzt. Die Längsachse der Rolle fällt dabei im Wesentlichen mit der Zylinderachse zusammen, entlang der auch die Stange angeordnet ist. Die Erstreckungsrichtung der Längsachse definiert dabei die Längsrichtung. Die Stange kann dabei im Wesentlichen horizontal im Gestell einer Förderanlage angeordnet werden, so dass Güter auf dem Rollenmantel senkrecht zur Längsrichtung auf dem Rollenmantel transportiert werden können.

Der Rollenmantel ist über die zumindest eine Lagerbaugruppe so gelagert, dass er sich um die Längsachse drehen kann. Dazu kann die Lagerbaugruppe zum Beispiel ein Kugellager aufweisen, dass eine Drehbewegung gegen eine sehr geringe Reibungskraft ermöglicht. Die Lagerbaugruppe kann insbesondere als Rollenboden ausgebildet sein oder einen Rollenboden aufweisen, und an einem Längsende der Rolle angeordnet sein, also einem Ende der Rolle in Erstreckungsrichtung der Längsachse. Bevorzugt weist die Rolle zumindest zwei solcher Lagerbaugruppen auf, wobei jeweils eine Lagerbaugruppe zur Lagerung jeweils eines Längsendes des Rollenmantels ausgebildet und angeordnet ist.

Die Innenbaugruppe ist dazu ausgebildet und vorgesehen, die Drehbewegung des Rollenmantels zu beeinflussen. Dabei erfolgt ein Kraftaustausch zwischen der Innenbaugruppe und dem Rollenmantel. Die Innenbaugruppe ist zumindest teilweise drehbar um die Stange ausgebildet. Der drehbare Teil der Innenbaugruppe ist dazu ausgebildet und vorgesehen, sich mit dem Rollenmantel mitzudrehen. Um einen Kraftaustausch zwischen dem Rollenmantel und der Innenbaugruppe zu ermöglichen, also insbesondere ein Bremsen und/oder ein Antreiben der Drehbewegung des Rollenmantels, besteht eine Kraftkopplung zwischen der Innenbaugruppe und dem Rollenmantel. Diese Kraftkopplung erfolgt über die Lagerbaugruppe und ermöglicht eine Kraftübertragung vom Rollenmantel zu den beiden Baugruppen (Lagerbaugruppe und Innenbaugruppe) und umgekehrt.

Sowohl die Lagerbaugruppe als auch die Innenbaugruppe sind als separate Baugruppen auf der Stange gelagert. Im Gegensatz zu der eingangs beschriebenen Rolle mit Wirbelstrombremse als Innenbaugruppe sind die Innenbaugruppe und die Lagerbaugruppe der Rolle gemäß dem ersten Aspekt als jeweils eigenständige Bauteile ausgebildet, die nicht stoffschlüssig miteinander verbunden sind. Die Innenbaugruppe und die Lagerbaugruppe werden jedoch über einen Formschluss so miteinander gekoppelt, dass ein Kraftübertrag von der Innenbaugruppe zum Rollenmantel und/oder umgekehrt ermöglicht wird. Dabei kann die Innenbaugruppe relativ zur Lagerbaugruppe verkippt werden, ohne die Kraftkopplung der Innenbaugruppe an die Lagerbaugruppe zu unterbrechen und/oder abzuschwächen. Dies führt dazu, dass die Innenbaugruppe, die an der Stange befestigt ist, bei einer Durchbiegung der Stange relativ zur Lagerbaugruppe verkippt werden kann. Insbesondere bei langen Rollen kann die Stange im Inneren der Rolle weiter durchhängen als der Rollenmantel selber, der aufgrund seines größeren Durchmessers an seiner Mitte weniger weit durchhängt als die Stange.

Da die Lagerbaugruppe zur Lagerung des Rollenmantels dient, und bevorzugt an einem Längsende des Rollenmantels und somit benachbart zum Gestell angeordnet ist, verändert sich die Ausrichtung der Lagerbaugruppe bei einer sich durchbiegenden Stange kaum. Die Innenbaugruppe, die normalerweise weiter im Inneren der Rolle angeordnet ist, also insbesondere näher an der Mitte der Stange als die Lagerbaugruppe, ist bei einem Durchbiegen der Stange stärker betroffen. So verändert sich die Ausrichtung der Innenbaugruppe beim Durchbiegen der Stange stärker als die Ausrichtung der Lagerbaugruppe. Dadurch entsteht eine Diskrepanz zwischen der Ausrichtung der Lagerbaugruppe und der Ausrichtung der Innenbaugruppe. Dabei kann sich die relative Ausrichtung der Innenbaugruppe zur Lagerbaugruppe ändern.

Weiterhin können stärkere Belastungen der Rolle, wie zum Beispiel der Transport von schweren Gütern oder vom Alter der Rolle abhängige Materialermüdungen zu einer Veränderung dieser relativen Ausrichtung zueinander führen. Die Eigenschaft der relativen Verkippbarkeit der beiden Baugruppen (nämlich der Lagerbaugruppe und der Innenbaugruppe) zueinander verringert somit Materialbelastungen, erheblich im Vergleich zu einer starren Kopplung der beiden Baugruppen oder einer einteiligen Ausbildung der beiden Baugruppen.

Die Rolle gemäß dem ersten Aspekt stellt somit eine Rolle bereit, die stabiler als die vorbekannten Rollen ist, und die sich sogar im Betrieb an veränderliche Belastungen anpassen kann.

In einer Ausführungsform beinhaltet die relative Verkippung eine Bewegung eines der Lagerbaugruppe abgewandten Endes der Innenbaugruppe radial nach außen. Radial nach außen bezeichnet dabei eine beliebige Richtung senkrecht von der Längsachse weg. Die Verkippung des der Lagerbaugruppe abgewandten Endes der Innenbaugruppe kann also insbesondere in mehrere Richtungen erfolgen, nämlich in alle Richtungen, die senkrecht und somit radial von der Längsachse fort weisen. Die relative Verkippung kann dabei so erfolgen, dass sich das der Lagerbaugruppe zugewandte Ende der Innenbaugruppe relativ zur Lagerbaugruppe kaum bewegt, während sich das der Lagerbaugruppe abgewandte Ende der Innenbaugruppe radial nach außen bewegt. Dabei bewegt sich das der Lagerbaugruppe abgewandte Ende der Innenbaugruppe mindestens doppelt, bevorzugt mindestens dreimal so weit wie das der Lagerbaugruppe zugewandte Ende der Innenbaugruppe, das (in Radialrichtung) im Wesentlichen unbeweglich relativ zur Lagerbaugruppe verharrt.

Gemäß einer Ausführungsform ist die Innenbaugruppe über eine Steckverbindung mit der Lagerbaugruppe gekoppelt. Die Innenbaugruppe und die Lagerbaugruppe stellen dabei eine erste und eine zweite Baugruppe bereit. Die erste Baugruppe der beiden Baugruppen (also die Innenbaugruppe oder die Lagerbaugruppe) weist zumindest einen Steckfortsatz auf, während die zweite Baugruppe der beiden Baugruppen (also die andere, entweder die Lagerbaugruppe oder die Innenbaugruppe) zumindest eine Aufnahme für den Steckfortsatz aufweist. Die Steckverbindung zwischen der Innenbaugruppe und der Lagerbaugruppe ist durch Einstecken des Steckfortsatzes in die Aufnahme in Erstreckungsrichtung der Längsachse bereitstellbar.

So kann zum Beispiel die Innenbaugruppe an dem der Lagerbaugruppe zugewandten Ende den zumindest einen Steckfortsatz aufweisen, während die Lagerbaugruppe an ihrer der Innenbaugruppe zugewandten Seite die zumindest eine Aufnahme für den Steckfortsatz aufweist. Alternativ kann auch die Lagerbaugruppe den Steckfortsatz aufweisen und die Innenbaugruppe die Aufnahme in dem der Lagerbaugruppe zugewandten Ende.

Weiterhin kann auch jede der beiden Baugruppen zumindest einen Steckfortsatz und zumindest eine Aufnahme aufweisen, so dass die beiden Baugruppen durch eine Steckverbindung aneinander gekoppelt werden können.

Dabei kann die zweite Baugruppe zumindest so viele Aufnahmen aufweisen, wie die erste Baugruppe Steckfortsätze.

Die erste Baugruppe kann zumindest vier Steckfortsätze aufweisen, bevorzugt zumindest acht Steckfortsätze.

Durch die Steckverbindung in Längsrichtung, also in Erstreckungsrichtung der Längsachse, sind die beiden Baugruppen bei Drehung um die Längsachse formschlüssig aneinander gekoppelt. Dadurch ist eine Kraftaustausch bzw. eine Kraftkopplung bzw. eine Kraftübertragung zwischen den beiden Baugruppen bei Drehung einer der beiden Baugruppen um die Längsachse ermöglicht. Diese Kraft kann von der Lagerbaugruppe weitergegeben werden auf den daran gelagerten Rollenmantel, bzw. von dem Rollenmantel empfangen werden und über die Lagerbaugruppe an die Innenbaugruppe weitergegeben werden.

Die Steckverbindung ist dabei bevorzugt ungesichert ausgebildet, weist also bevorzugt insbesondere keine Rastnasen auf, die ein Herausrutschen des Steckfortsatzes aus der Aufnahme behindern. Dadurch wird ermöglicht, dass der Steckfortsatz je nach Durchbiegung der Stange und der Relativposition der Innenbaugruppe zur Lagerbaugruppe teilweise aus der Aufnahme herausrutschen kann, ohne die formschlüssige Kraftkopplung bei Drehung einer der beiden Baugruppen zu unterbrechen.

In einer Weiterbildung dieser Ausführungsform ist die Aufnahme so groß ausgebildet, also so dimensioniert, dass der Steckfortsatz in der Aufnahme ein Spiel in radialer Richtung aufweist. Die Aufnahme ist also in radialer Richtung größer ausgebildet als der Steckfortsatz. Das Spiel schafft einen Bewegungsfreiraum für den Steckfortsatz in radialer Richtung, also in Richtung von der Längsachse weg und/oder zu der Längsachse hin. Wird die Innenbaugruppe relativ zur Lagerbaugruppe verkippt, so wird auch der zumindest eine Steckfortsatz in der Aufnahme verkippt. Durch das Spiel wird der Steckfortsatz jedoch nicht weiter durch eine elastische oder unelastische Verbiegung belastet, sondern er ist, wie die beiden Baugruppen, verbiegungsfrei verkippbar.

Dieses Spiel in radialer Richtung stellt eine besonders günstige Möglichkeit dar, wie die relative Verkippung der beiden Baugruppen zueinander ermöglicht werden kann. Im Gegensatz zu einer alternativ oder zusätzlich verwirklichten elastischen Verformbarkeit des Steckfortsatzes weist das Spiel den Vorteil auf, eine bei Drehung der Verkippungsrichtung wechselnde elastische Belastung des Steckfortsatzes zu reduzieren.

Dabei ist das Spiel in radialer Richtung zumindest einen Viertelmillimeter, bevorzugt einen Drittelmillimeter, besonders bevorzugt einen halben Millimeter, besonders bevorzugt einen Dreiviertelmillimeter groß ausgebildet. Diese Größe bezieht sich auf das Spiel in (positiver und/oder negativer) radialer Richtung des in die Aufnahme eingesteckten Steckfortsatzes. Weist die erste Baugruppe mehrere Steckfortsätze auf, die in mehrere Aufnahmen der zweiten Baugruppe einsteckbar sind, so weist jede dieser Steckverbindungen ein Spiel auf, das zumindest so groß wie beschrieben ausgebildet ist. Jeder in eine Aufnahme gesteckte Steckfortsatz weist dabei dieses Spiel als Minimalspiel sowohl in Richtung nach radial außen, als auch in Richtung nach radial innen auf. Somit ist gewährleistet, dass die beiden Baugruppen relativ zueinander gut verkippbar sind. Das beschriebene Spiel eignet sich besonders für Rollen mit einem Außendurchmesser des Rollenmantels von ca. 50 mm.

Anders ausgedrückt kann das Spiel zumindest 0,5% des Außendurchmessers betragen, bevorzugt zumindest ein 2/3 Prozent des Außendurchmessers, besonders bevorzugt zumindest 1% des Außendurchmessers, besonders bevorzugt zumindest 1,5% des Außendurchmessers.

Gemäß einer Ausführungsform weist die Innenbaugruppe an dem der Lagerbaugruppe zugewandten Ende Steckfortsätze auf, die in Steckfortsätze an einem der Innenbaugruppe zugewandten Ende der Lagerbaugruppe eingreifen. Somit weisen sowohl die Innenbaugruppe als auch die Lagerbaugruppe jeweils Steckfortsätze auf, die ineinander eingreifen. Hierbei kann die Lagerbaugruppe z.B. genau so viele Steckfortsätze wie die Innenbaugruppe aufweisen. Die Steckfortsätze der beiden Baugruppen können an einander zugewandten Enden der beiden Baugruppen so angeordnet sein, dass sie von der jeweiligen Baugruppe weg zur anderen Baugruppe weisen. Die Steckfortsätze können um die Stange herum angeordnet sein und/oder so ausgerichtet sein, dass sie von der jeweiligen Baugruppe weg in eine Richtung weisen, die im Wesentlichen parallel zur Achse der Stange ausgerichtet ist. Die Steckfortsätze der beiden Baugruppe können miteinander und/oder ineinander direkt oder indirekt, also z.B. über ein Zwischenelement, verzahnt sein. Mit anderen Worten kann in Richtung um die Stange herum jeweils ein Steckfortsatz der Lagerbaugruppe auf einen Steckfortsatz der Innenbaugruppe folgen und umgekehrt.

In einer Weiterbildung dieser Ausführungsform sind sowohl die Steckfortsätze der Innenbaugruppe als auch die Steckfortsätze der Lagerbaugruppe in Eingriffen eines Zwischenelements angeordnet. Dabei ist das Zwischenelement zwischen der Innenbaugruppe und der Lagerbaugruppe angeordnet und überträgt die Drehbewegung der einen der beiden Baugruppen auf die andere der beiden Baugruppen und umgekehrt. Das Zwischenelement kann z.B. im Wesentlichen als ein Zahnrad ausgebildet sein, das zwischen seinen Zähnen die Eingriffe für die Steckfortsätze aufweist und bereitstellt. In die Eingriffe können abwechselnd und von den beiden einander gegenüberliegenden Seiten des Zwischenelements aus jeweils die Steckfortsätze der beiden Baugruppen eingreifen.

Hierbei kann das Zwischenelement aus einem elastischen Kunststoff ausgebildet sein, drehbar um die Stange gelagert sein, und/oder verkippbar relativ zur Stange gelagert sein. Der elastische Kunststoff kann ein Verkippen der beiden Baugruppen zueinander abfedern und/oder ermöglichen. Die Elastizität des Zwischenelements kann eine Verdrehung des Zwischenelements ermöglichen, die wiederum ein Verkippen des Zwischenelements relativ zur Stange ermöglicht.

In einer Ausführungsform ist die Innenbaugruppe als Wirbelstrombremse mit zumindest einem ortsfesten Magneten und einem um die Stange drehbar gelagerten Wirbelstromaufnehmer ausgebildet, wobei der Wirbelstromaufnehmer und der Magnet radial beabstandet voneinander angeordnet sind. Gerade bei solchen Wirbelstrombremsen kann eine qualitativ hochwertige und belastbare Kraftkopplung zwischen der Wirbelstrombremse und dem Rollenmantel über die Lagerbaugruppe notwendig sein, um ein zu starkes Beschleunigen der Rollbewegung effektiv abzubremsen. Dabei ist die verkippbare Kraftkopplung der Wirbelstrombremse an die Lagerbaugruppe besonders widerstandsfähig und somit langlebig.

In einer Weiterbildung dieser Ausführungsform ist zwischen dem Wirbelstromaufnehmer und dem Rollenmantel ein ferromagnetisches Abschirmrohr angeordnet, dass sowohl radial beabstandet zum Rollenmantel als auch radial beabstandet zum Wirbelstromaufnehmer angeordnet ist. Das Abschirmrohr ist ortsfest ausgebildet und dient zum Abschirmen von Wirbelströmen, die ansonsten im Rollenmantel eine unerwünschte Bremswirkung verursachen könnten. Dadurch wird ein besonders einfaches und sanftes Anrollen des Rollenmantels aus einer Ruheposition heraus bereitgestellt.

Bei dieser Anordnung ist zwischen dem Magneten, der ortsfest und am nächsten zu der Zylinderachse der Rolle an der Stange angeordnet ist, und dem Wirbelstromaufnehmer ein erster radialer Luftspalt ausgebildet, zwischen dem Wirbelstromaufnehmer und dem radial weiter außen liegenden Abschirmrohr ein zweiter radialer Luftspalt, und schließlich zwischen dem Abschirmrohr und dem Rollenmantel ein dritter radialer Luftspalt.

Diese Luftspalte sind klein dimensioniert ausgebildet, jedoch nicht so klein, dass eine Kontaktgefahr der über den jeweiligen Luftspalt beabstandeten Bauteile besteht. Zum Beispiel durch das oben beschriebene Spiel kann ein solcher Kontakt selbst bei Belastungen vermieden werden, also z.B. bei einem Durchhängen der Stange, beim Fördern von schweren Gütern auf der Rolle und/oder bei hohen Drehgeschwindigkeiten mit starken Fliehkräften. Um ein Kontaktieren der entsprechenden Bauelemente zu unterbinden, kann die Relativbewegung der einzelnen Bauelemente zueinander unter anderem durch einen vorbestimmten Bewegungsfreiraum der Verkippbewegung zwischen der Lagerbaugruppe und der Innenbaugruppe vorbestimmt sein, also z.B. einer vorbestimmten Dimensionierung des Spiels.

In einer Weiterbildung dieser Ausführungsform ist der Wirbelstromaufnehmer rohrförmig ausgebildet und an zumindest zwei in Erstreckungsrichtung der Längsachse voneinander beabstandeten Stellen drehbar um die Stange gelagert. Diese beiden Stellen können zum Beispiel die beiden Längsenden des Wirbelstromaufnehmers sein. Gerade am Wirbelstromaufnehmer entstehen im Betrieb hohe Beanspruchungen aufgrund der Bremswirkung zwischen dem Magneten und dem Wirbelstromaufnehmer einerseits, sowie der Kraftkopplung des Wirbelstromaufnehmers über die Lagerbaugruppe an den Rollenmantel andererseits. Deswegen ist der Wirbelstromaufnehmer nicht nur an lediglich einer Stelle drehbar um die Stange gelagert, sondern an zumindest zwei Stellen, was eine besonders sichere und gute Lagerung gewährleistet. Die Lagerung kann über Kugellager oder Ähnliches erfolgen.

In einer Ausführungsform weist die Innenbaugruppe einen Motor zum Antreiben einer Drehbewegung des Rollenmantels um die Stange herum auf. In dieser Ausführungsform kann die Rolle somit als eine Antriebsrolle ausgebildet sein, die den Rollenmantel antreibt, und über den Rollenmantel auch einen ggf. vorhandenen Fördergurt.

In einer Ausführungsform ist die Lagerbaugruppe als Rollenboden ausgebildet oder weist einen Rollenboden auf, wobei der Rollenmantel mit einem seiner Längsenden an der Lagerbaugruppe gelagert ist. Insbesondere kann die Rolle zwei Lagerbaugruppen an den Längsenden des Rollenmantels aufweisen, die jeweils als Rollenboden ausgebildet sind oder einen Rollenboden aufweisen. Die Lagerung des Rollenmantels über am Längsende befestigte Rollenböden hat den Vorteil, das Rolleninnere optisch und/oder mechanisch abzuschließen.

Ein zweiter Aspekt betrifft eine Förderanlage nach Anspruch 14, mit einem ortsfesten Gestell, in dem eine Rolle nach dem ersten Aspekt angeordnet ist, wobei die Stange der Rolle ortsfest am Gestell befestigt ist. Die Förderanlage kann dabei insbesondere als eine unangetriebene Förderanlage ausgebildet sein, die ein Gefälle aufweist und zumindest eine gebremste Rolle, die ein zu starkes Beschleunigen der Güter auf der Förderstrecke verhindert. Die Innenbaugruppe der Rolle stellt dabei die dazu benötigte Bremswirkung bereit, z.B. wenn die Innenbaugruppe als Bremse ausgebildet ist, insbesondere als Wirbelstrombremse.

Die Erfindung wird nachfolgend anhand von in Figuren dargestellten Ausführungsformen näher beschrieben. Einzelne, in den Figuren gezeigte Merkmale können mit Merkmalen von anderen Ausführungsformen kombiniert werden. Gleiche Bezugszeichen in unterschiedlichen Ausführungsformen können gleiche oder ähnliche Merkmale kennzeichnen. Es zeigen:
- Figur 1: eine schematische Seitenansicht auf eine Förderanlage;
- Figur 2: in einer seitlichen Ansicht eine Rolle gemäß einer Ausführungsform aus einer radialen Richtung;
- Figur 3A: in einer ersten perspektivischen Ansicht einige Bauteile im Inneren der Rolle aus Figur 2;
- Figur 3B: in einer zweiten perspektivischen Ansicht einige Bauteile im Inneren der Rolle aus Figur 2;
- Figur 4: einen Querschnitt durch eine Lagerbaugruppe der Rolle aus Figur 2;
- Figur 5: einen ersten Längsschnitt durch die Rolle aus Figur 2;
- Figur 6: einen zweiten, versetzten und vergrößerten Längsschnitt durch ein Ende der Rolle aus Figur 2;
- Figur 7: in einer perspektivischen Ansicht einen Teilquerschnitt einer alternativen Ausführungsform;
- Figur 8: in einer perspektivischen Ansicht ein Rollenende der in Fig. 7 gezeigten Ausführungsform ohne Rollenmantel und
- Figur 9: einen Querschnitt durch ein Zwischenelement der Rolle aus den Figuren 7 und 8.

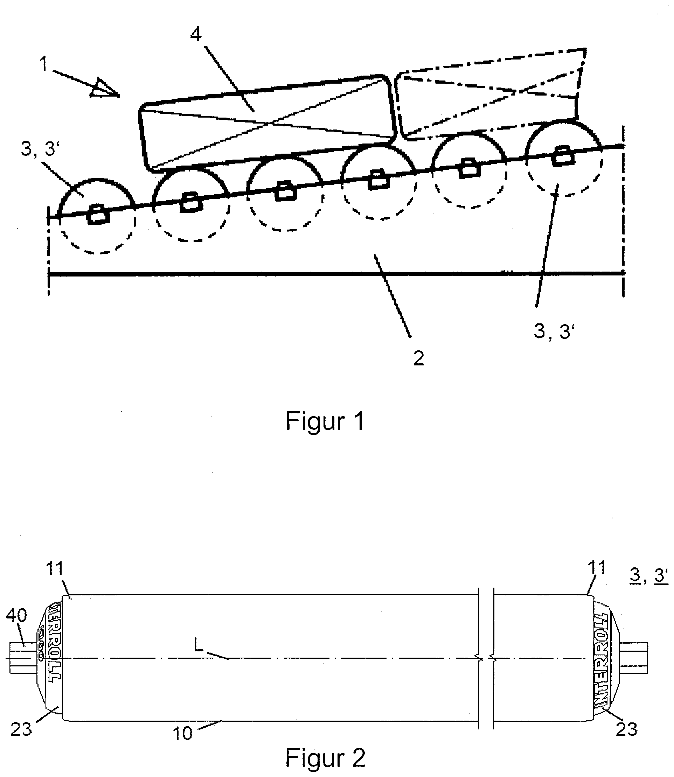

**Fig. 1** zeigt in einer Seitenansicht eine Förderanlage 1, die als Rollenbahn ausgebildet ist. Die Förderanlage 1 weist ein Gestell 2 auf, das ortsfest angeordnet ist und an dem eine Mehrzahl von Rollen 3; 3' angeordnet ist. Die Rollenmäntel der Mehrzahl von Rollen 3; 3' bilden eine Förderstrecke für ein Gut 4, das auf der Förderanlage 1 gefördert wird. Die Rollen 3; 3' können frei und ohne eigenen Antrieb und/oder eigene Bremse ausgeführt sein und tragen unterstützend das darauf aufliegende Gut 4, welches aufgrund seines Gewichts auf der durch die Rollen 3; 3' gebildeten Förderstrecke herabrollt. Eine oder mehrere der Rollen 3; 3' können als eine Rolle mit einer Innenbaugruppe ausgebildet sein.

**Fig. 2** zeigt in einer seitlichen Ansicht eine Rolle 3; 3' aus einem radial von der Rolle 3; 3' beabstandeten Blickpunkt. Die Rolle 3; 3' ist im Wesentlichen zylinderförmig ausgebildet und erstreckt sich in Längsrichtung, also entlang einer Längsachse L der Rolle 3; 3'. Die Rolle 3; 3' ist über eine Stange 40 an dem in Fig. 1 gezeigten Gestell 2 befestigbar. Die Stange 40 ist entlang der Längsachse L der Rolle 3; 3' ausgebildet und fällt mit der Zylinderachse der Rolle 3; 3' zusammen.

Die Rolle 3; 3' weist einen rohrförmigen Rollenmantel 10 auf, der als Zylindermantel der Rolle 3; 3' ausgebildet ist und die Rolle 3; 3' in radialer Richtung begrenzt. Die Rolle 3; 3' kann mit der Stange 40 so in dem in Fig. 1 gezeigten Gestell 2 befestigt werden, dass die Außenseite des Rollenmantels 10 einen Teil der Förderstrecke für das zu fördernde Gut 4 bildet. An den beiden gegenüberliegenden Längsenden des Rollenmantels 10 sind Rollenböden 23 (als Teil einer im Folgenden beschriebenen Lagerbaugruppe) angeordnet, jeweils einer als Zylinderboden und einer als Zylinderdeckel der Rolle 3; 3'. Die Rollenböden 23 verschließen das Innere des Rollenmantels 10 an seinen Längsenden.

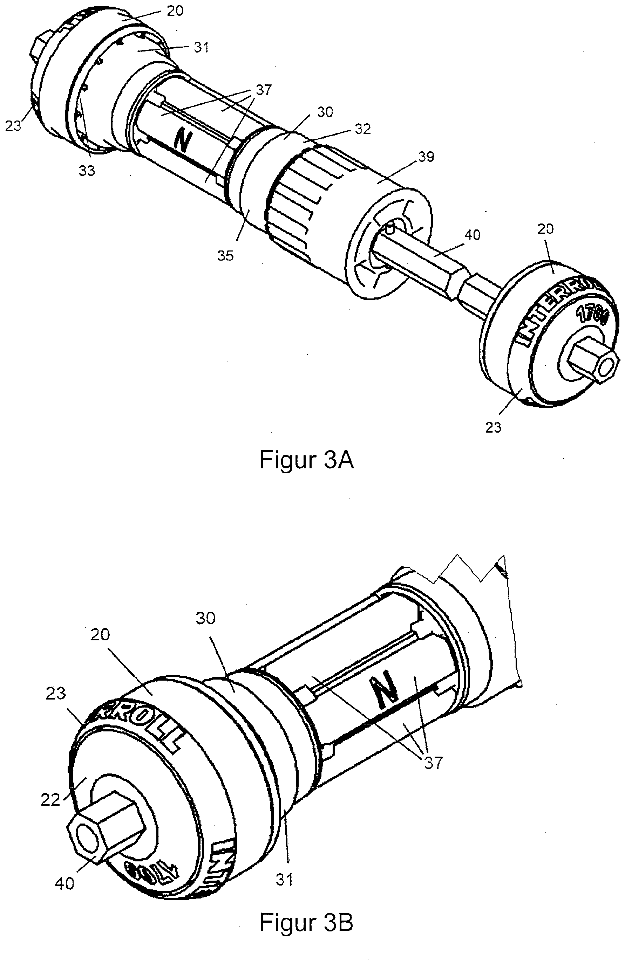

**Figuren 3A und 3B** zeigen in einer ersten und zweiten (von der ersten verschiedenen) perspektivischen Ansicht einige Bauteile im Inneren der Rolle 3. Dabei ist insbesondere die Stange 40 gezeigt, die die Rolle 3 vollständig von einem Längsende zum gegenüberliegenden Längsende durchdringt.

In einer alternativen Ausführungsform kann die Stange 40 mit einer Durchbrechung ausgebildet sein und somit nur teilweise entlang der Längsachse der Rolle 3 ausgebildet sein.

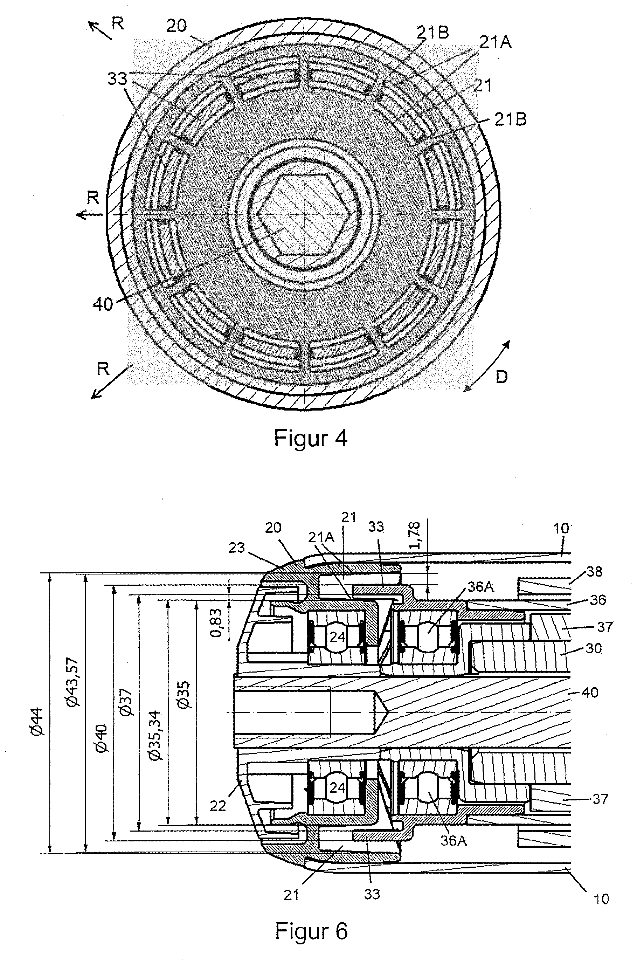

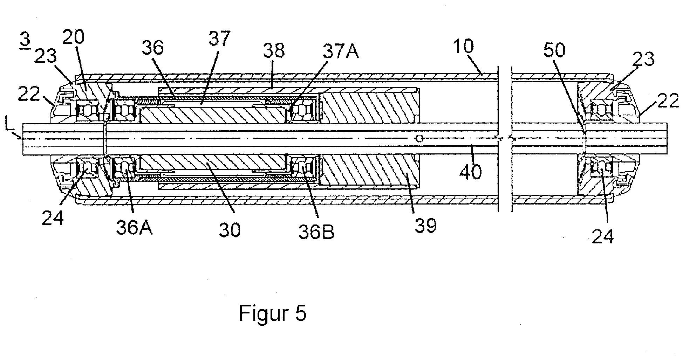

Die in den Figuren 3A und 3B gezeigte Rolle 3 ist ohne Rollenmantel 10 gezeigt (vgl. Fig. 2). Weiterhin ist die den Figuren 3A und 3B gezeigte Rolle ohne Abschirmrohr und ohne Wirbelstromaufnehmer gezeigt (vgl. Figs. 5 und 6). An den beiden Längsenden der Rolle 3 ist jeweils eine Lagerbaugruppe 20 angeordnet, die jeweils einen Rollenboden 23 aufweist, der den (nicht gezeigten) Rollenmantel verschließt. Jede Lagerbaugruppe 20 weist neben dem Rollenboden 23 auch eine Dichtung 22 auf, die über ein Lager 24 (vgl. Fig. 6) an der Stange 40 gelagert ist.

Benachbart zu einem der Lagerbauelemente 20 ist eine Innenbaugruppe 30 an der Stange 40 angeordnet, die in den Figuren 3A und 3B nicht vollständig, sondern nur teilweise gezeigt ist. Die Innenbaugruppe 30 ist in dem in den Figuren dargestellten Ausführungsbeispiel als Wirbelstrombremse ausgebildet.

Die Wirbelstrombremse weist eine Mehrzahl von Magneten 37 auf, die ortsfest an der Stange 40 gelagert sind. Dabei ist immer ein Nordpolmagnet benachbart zu einem Südpolmagnet angeordnet, so dass ein Magnetfeld zwischen den Magneten 37 ausgebildet ist. In dieses Magnetfeld kann ein Wirbelstromaufnehmer 36 eingreifen (vgl. Figuren 5 und 6). Der Wirbelstromaufnehmer 36 umhüllt dabei die Magneten 37 radial außen.

Ein der Lagerbaugruppe 20 zugewandtes Ende der Innenbaugruppe 30, das Ende 31, ist benachbart zur Lagerbaugruppe 20 angeordnet. Dieses Ende 31 der Innenbaugruppe 30 weist mehrere Steckfortsätze 33 auf, die in Aufnahmen der Lagerbaugruppe 20 eingreifen. Das der Lagerbaugruppe 20 zugewandte Ende 31 der Innenbaugruppe 30 ist drehbar um die Stange 40 gelagert, so dass es sich genau dann um die Stange 40 dreht, wenn sich die Lagerbaugruppe 20 - genauer gesagt - der Rollenboden 23 um die Stange 40 dreht. Dies geschieht insbesondere dann, wenn der Rollenmantel 10 (vgl. Fig. 2) sich um die Stange 40 dreht, zum Beispiel angetrieben von einem auf der Förderstrecke herunter rollendem Gut.

Die Innenbaugruppe 30 ist an dem der Lagerbaugruppe 20 zugewandten Ende 31 mit der Lagerbaugruppe 20 über eine Steckverbindung gekoppelt. Am gegenüberliegenden Ende, dem von der Lagerbaugruppe 20 abgewandten Ende 32 der Innenbaugruppe 30, ist die Innenbaugruppe 30 benachbart zu einem Block 39 angeordnet. Der Block 39 ist ortsfest mit der Stange 40 verbunden und dient als ortsfeste Ankerung für ein Abschirmrohr 38, das in den Figuren 5 und 6 gezeigt ist.

**Fig. 4** zeigt einen Querschnitt durch das Rohr 3 und zwar durch die Lagerbaugruppe 20 hindurch, die benachbart zur Innenbaugruppe 30 angeordnet ist. In der Mitte der Figur 4 ist die Stange 40 im Querschnitt zu erkennen, die kantig ausgebildet ist, in dem in den Figuren gezeigten Ausführungsbeispiel hexaederförmig.

Die Lagerbaugruppe 20 weist mehrere Aufnahmen 21 auf. Jede Aufnahme 21 ist in radialer Richtung durch zwei gebogene Stege begrenzt und in Drehrichtung D durch jeweils einen strahlförmigen Steg. Die beiden gebogenen Begrenzungen sind als gebogene Anschläge 21A ausgebildet, während die geraden Stege als strahlförmige Anschläge 21B ausgebildet sind. Die Aufnahme 21 ist als Aussparung und/oder Vertiefung in der Lagerbaugruppe ausgebildet.

In jede Aufnahme 21 greift jeweils ein zugeordneter Steckfortsatz 33 der Innenbaugruppe 30 ein.

In der in den Figuren gezeigten Ausführungsform weist die Innenbaugruppe 30 zwölf Steckfortsätze 33 auf, die in zwölf zugeordnete Aufnahmen 21 der Lagerbaugruppe 20 eingreifen. Bei Drehung des Rollenmantels 10 in Drehrichtung D wirkt eine Kraft auf die Lagerbaugruppe 20, da der Rollenmantel 10 und die Lagerbaugruppe 20 z.B. formschlüssig, kraftschlüssig und/oder stoffschlüssig miteinander verbunden sind.

Dadurch wird eine Drehbewegung der Lagerbaugruppe 20 um die Stange 40 bewirkt. Diese Drehbewegung erfolgt in Drehrichtung D um die Stange 40 herum, in der in Fig. 4 gezeigten Schnittansicht zum Beispiel im Uhrzeigersinn und/oder im Gegenuhrzeigersinn. Dabei stoßen die strahlförmigen Anschläge 21B der Aufnahmen 21 an die Steckfortsätze 33, die in den Aufnahmen 21 angeordnet sind. Deswegen nehmen die Aufnahmen 21 die Steckfortsätze 33 bei der Drehbewegung mit und übertragen somit die Kraft der Drehbewegung des Rollenmantels 10 auf die Innenbaugruppe 30.

Die Steckverbindung zwischen der Lagerbaugruppe 20 und der Innenbaugruppe 30 kann im Wesentlichen ohne Bewegungsfreiraum, also spielfrei, in Drehrichtung D ausgebildet sein, z.B. dadurch, dass die strahlförmigen Anschlägen 21B der Aufnahmen 21 passgenau an die Breite der Steckfortsätze 33 (in Drehrichtung D) angepasst sind. Hierbei kann eine Spiel- oder Übergangspassung die Montage erleichtern.

Bei Drehbewegung des Rollenmantels 10 in Drehrichtung D wird - wie beschriebenen - eine Drehbewegung der Lagerbaugruppe 20 angetrieben, die wiederum über die Steckverbindung eine Drehbewegung von drehbaren Bauteilen der Innenbaugruppe 30 bewirkt.

Mit anderen Worten ist die Innenbaugruppe 30 über die Steckverbindung, insbesondere über die Steckfortsätze 33 und die strahlenförmigen Anschläge 21B, formschlüssig mit der Lagerbaugruppe 20 gekoppelt, wodurch ein Kraftaustausch bzw. eine Kraftübertragung zwischen der Innenbaugruppe 30 über die Lagerbaugruppe 20 zum Rollenmantel 10 und umgekehrt ermöglicht wird.

Weiterhin ist in Fig. 4 die Radialrichtung R gezeigt: Die Radialrichtung weist radial von der Stange 40 weg nach außen hin zunächst in Richtung Rollenmantel und über den Rollenmantel hinaus nach außen. Somit beinhaltet die Radialrichtung eine Vielzahl von Richtungen senkrecht zur Längsachse L.

**Fig. 5** zeigt einen Längsschnitt durch die Rolle 3. Deutlich gezeigt ist der Schnitt durch die an der Längsachse L angeordnete Stange 40. Weiterhin ortsfest an der Stange 40 befestigt sind der Block 39 und die Magneten 37 der Innenbaugruppe 30. Die Magnete 37 sind dabei in einer Magnetkartusche 37A der Lagerbaugruppe 30 angeordnet.

An den beiden Längsenden der Rolle 3 ist jeweils eine Lagerbaugruppe 20 angeordnet, mit jeweils einer Dichtung 22, einem Rollenboden 23 und einem Lager 24. Um die Stange 40 und die Dichtung 22 ist der Rollenboden 23 in Drehrichtung D mittels des Lagers 24 drehbar angeordnet. Der Rollenmantel 10 liegt mit jedem seiner beiden Längsenden an jeweils einer der beiden Lagerbaugruppen 20 an und ist deswegen ebenfalls um die Längsachse L drehbar gelagert.

Um die Magneten 37 der Lagerbaugruppe 30 herum ist der rohrförmig ausgebildete Wirbelstromaufnehmer 36 angeordnet, der aus einem elektrisch gut leitfähigem Material wie z.B. Kupfer oder Aluminium ausgebildet ist. Der Wirbelstromaufnehmer 36 ist an seinen beiden Längsenden drehbar um die Stange 40 gelagert und zwar über zwei Lager 36A und 36B. Die beiden Lager 36A und 36B sind an den beiden Längsenden (hier: die Enden 31 und 32) der Innenbaugruppe 30 angeordnet und ermöglichen eine Drehung des Wirbelstromaufnehmers 36 um die Stange 40 herum. Bei Drehung des Rollenmantels 10 wird eine Drehbewegung der Lagerbaugruppe 20 verursacht, da die Längsenden des Rollenmantels 10 fest mit den Rollenböden 23 der Lagerbaugruppe 20 verbunden sind. Die Lagerbaugruppe 20 gibt diese Drehbewegung über die in Fig. 4 gezeigte Steckverbindung weiter auf die Innenbaugruppe 30, genauer gesagt auf das der Lagerbaugruppe 20 zugeordnete Ende 31 der Innenbaugruppe 30 und den mit dem Ende 31 fest verbundenen Wirbelstromaufnehmer 36. Dieser dreht sich dabei um die Stange 40 und insbesondere um die Magneten 37. Der Wirbelstromaufnehmer 36 ist im Magnetfeld der Magneten 37 angeordnet, also im Feldlinienverlauf zwischen den Magneten 37. Deswegen entstehen bei einer Drehung des Rollenmantels 10 in dem einem elektrisch gut leitendem Wirbelaufnehmer 36 Elektronenbewegungen in Form von Wirbeln (Wirbelströme), die dieser Drehbewegung entgegenwirken und sie abbremsen. Dadurch wird die Bewegung der drehbaren Teile der Innenbaugruppe 30 gehemmt, also insbesondere des Wirbelstromaufnehmers 36 und der Steckfortsätze 33, die somit die Drehbewegung der Lagerbaugruppe 20 und des Rollenmantels 10 hemmen. Dadurch wird die Drehbewegung des Rollenmantels 10 von der Wirbelstrombremse abgebremst.

An dem ortsfesten Block 39 ist die rohrförmige, ortsfeste Abschirmung 38 angeordnet, die einseitig (also an einem Längsende) befestigt ist am Block 39, zum Beispiel durch eine Verpressung. Die Abschirmung 38 kann aus einem ferromagnetischen Material ausgebildet sein und bewirkt bei Drehung der Rolle 3 einerseits, ein Bremsmoment infolge einer stetigen Ummagnetisierung des Rollenmantels 10 zu verhindern, und anderseits, das von dem Dauermagneten ausgehende Magnetfeld einzig für die Wirbelstrobremse zu nutzen. Von innen nach außen ist somit der Wirbelstromaufnehmer 36 radial von den Magneten 37, die Abschirmung 38 radial von dem Wirbelstromaufnehmer 36 und schließlich der Rollenmantel 10 radial von der Abschirmung 38 beabstandet. Zwischen diesen Bauteilen sind jeweils Luftspalte ausgebildet, wobei sich die genannten Bauteile selber insbesondere bei Durchbiegen der Stange 40 nicht berühren. Insbesondere besteht kein elektrischer Kontakt zwischen den genannten Bauteilen.

Durch die Lagerung des Wirbelstromaufnehmers 36 an den beiden Lagern 36A und 36B wird eine besonders starke und stabil gelagerte Innenbaugruppe 30 bereitgestellt, die Belastungen gut standhalten kann.

Bei vorbekannten Modellen ist ein Wirbelstromaufnehmer nur einseitig gelagert, was zu Verschleißerscheinungen wie z.B. einem mechanischen und elektrischen Kontakt des Wirbelstromaufnehmers mit den Magneten oder einer Abschirmung führen kann, insbesondere bei einem Durchbiegen der Stange bzw. des Rohres und/oder durch Bremsbelastungen im Betrieb der Rolle. Diese Verschleißerscheinungen werden durch die verbesserte Lagerung des Wirbelstromaufnehmers 36 über die beiden Lager 36A und 36B reduziert und/oder vermieden.

**Fig. 6** zeigt einen Längsschnitt durch einen Ausschnitt der Rolle 3 und zwar an einem Längsende der Rolle 3. Der Längsschnitt geht insbesondere durch die zur Innenbaugruppe 30 benachbarte Lagerbaugruppe 20. In deren Rollenboden 23 sind Aufnahmen 21 so ausgebildet, dass sie in Richtung zur Innenbaugruppe 30 hin offen sind. Die Aufnahmen 21 sind also mit ihrer Öffnung in Längsrichtung weisend ausgerichtet und somit parallel zur Längsachse L und weisen mit ihrer Öffnung jeweils in Richtung zur Innenbaugruppe 30.

Dadurch ist eine gute Eingriffsmöglichkeit für die Steckfortsätze 33 der Innenbaugruppe 30 bereitgestellt, die ebenfalls in Längsrichtung und zur Lagerbaugruppe 20 hin weisend ausgebildet sind und in die Aufnahme 21 eingreifen.

In einem zusammengebauten Zustand der Rolle 3 (wie in den Figuren gezeigt) besteht eine Steckverbindung zwischen der Lagerbaugruppe 20 und der Innenbaugruppe 30. Diese Steckverbindung stellt eine formschlüssige Kraftkopplung zwischen diesen beiden Baugruppen 20 und 30 bereit, wodurch eine Drehbewegung einer der beiden Baugruppen um die Stange 40 herum auf die andere Baugruppe übertragen wird (vgl. Fig. 4).

In radialer Richtung R, also von der Stange 40 weg weisend, hat jeder Steckfortsatz 33 in der Aufnahme 21 ein Spiel, also einen Bewegungsfreiraum in radialer Richtung. Dieses Spiel wird bereitgestellt durch eine Beabstandung jedes Steckfortsatzes 33 von jeder radialen Begrenzung der Aufnahme 21, also insbesondere von den beiden gebogenen Anschlägen 21A. Das Spiel ist sowohl nach radial außen als auch nach radial innen ausgebildet.

Im linken Teil der Fig. 6 sind beispielhaft Bemaßungen in Millimetern angegeben, die eine Größenvorstellung von dem ausgebildeten Spiel der in den Figuren dargestellten Ausführungsform geben. So ist ein Spiel in radialer Richtung nach radial innen 0,83 mm groß ausgebildet, während das Spiel nach radial außen 1,78 mm groß ausgebildet ist.

Dadurch wird eine radiale Bewegung des Steckfortsatzes 33 im Inneren der Aufnahme 21 ermöglicht, insbesondere ein Verkippen der Innenbaugruppe 30 relativ zu der Lagerbaugruppe 20, ohne Bauteile der Rolle 3 zu verformen und ohne die formschlüssige Kraftkopplung bzw. Kraftübertragung bzw. Kraftaustausch zwischen dem Rollenmantel 10 und der Innenbaugruppe 30 in Drehrichtung D zu unterbrechen.

Ein solches relatives Verkippen der beiden Baugruppen 20 und 30 zueinander kann von einem Durchbiegen und/oder Durchhängen der Stange 40 im Inneren der Rolle 3 verursacht werden. Da die Innenbaugruppe 30 über die beiden Lager 36A und 36B fest an und (in Längsrichtung) parallel zu einem Abschnitt der Stange 40 gelagert ist, bewegt sich das der Lagerbaugruppe 20 abgewandte Ende 32 der Innenbaugruppe 30 stärker nach unten, wenn sich die Stange 40 durchbiegt, als das der Lagerbaugruppe 20 zugewandte Ende 31 der Innenbaugruppe 30. Die Lagerbaugruppe 20 bewegt sich dabei (wenn überhaupt) nur genau so weit nach unten wie das der Lagerbaugruppe 20 zugewandte Ende 31 der Innenbaugruppe 30. Da die Lagerbaugruppe 20 jedoch angrenzend zur ortsfesten Befestigung der Stange 40 im Gestell 2 (vgl. Fig. 1) angeordnet ist, bewegt sich die Lagerbaugruppe 20 beim Durchbiegen der Stange 40 kaum. Wenn überhaupt, dann bewegt sich die Lagerbaugruppe 20 nur im Rahmen einer möglichen Verschränkung des Rollenbodens 23 und der mit der Stange verbundenen Dichtung 22. Zudem ist die Lagerbaugruppe 20 fest mit dem Rollenmantel 10 verbunden, der sich ebenfalls (aufgrund seines größeren Durchmessers) wesentlich weniger durchbiegt als die dünnere Stange 40. Somit Verkippen die beiden Baugruppe 20 und 30 daher relativ zueinander.

Die Steckfortsätze 33 sind zunächst parallel zu den Wänden der Aufnahme 21 in Längsrichtung ausgerichtet und werden auch in Längsrichtung in die Aufnahmen eingesteckt. Beim Durchbiegen der Stange 40 und beim relativen Verkippen der Innenbaugruppe 30 zur Lagerbaugruppe 20 geraten die Steckfortsätze 33 in eine schräg zu den Wänden der Aufnahme 21 angeordnete Position. Durch das oben beschriebene radiale Spiel hat jeder Steckfortsatz 33 ausreichend Bewegungsfreiraum für diese Schrägstellung, nämlich diese Verkippung relativ zu den Begrenzungswänden der Aufnahme 21. Dadurch wird eine Materialbelastung nicht nur der Steckfortsätze 33, sondern auch der daran anschließenden Bauteile der Rolle 3 reduziert und/oder vermieden.

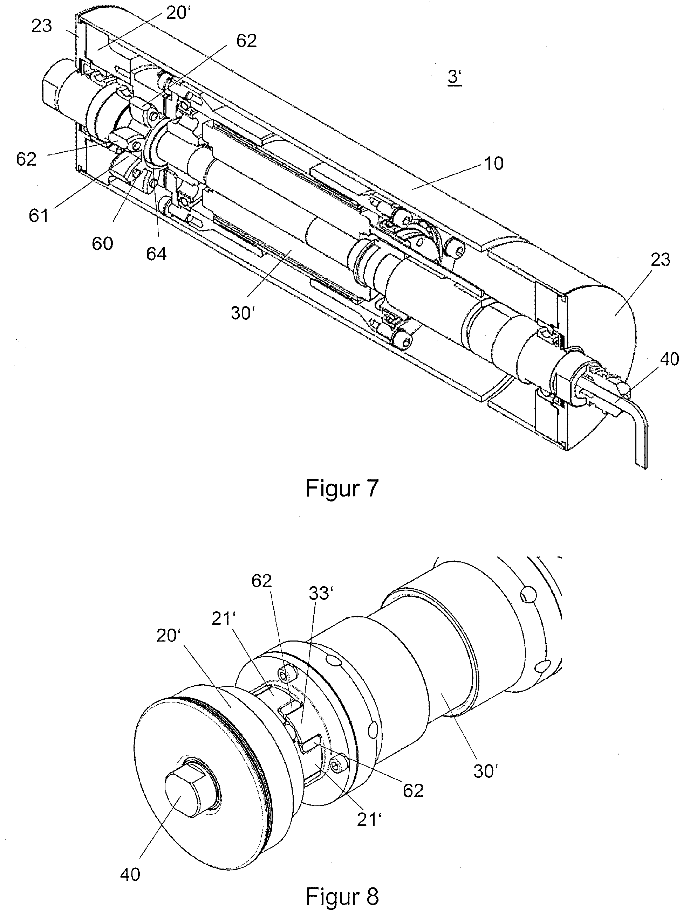

**Figur 7** zeigt in einer perspektivischen Ansicht einen Teilquerschnitt durch eine Rolle 3', die etwas anders als die voranstehend beschriebene Rolle 3 ausgebildet ist. Die Rolle 3' ähnelt der voranstehend beschriebenen Rolle 3, weswegen gleiche oder ähnliche Bauteile der Rolle 3' mit denselben Bezugszeichen wie die der Rolle 3 gekennzeichnet sind. So weist die Rolle 3' z.B. auch einen Rollenmantel 10 auf, der drehbar um eine Stange 40 gelagert ist.

Die Rolle 3' weist eine Innenbaugruppe 30' auf, die im Inneren des Rollenmantels 10 angeordnet ist und zumindest teilweise drehbar um die Stange 40 gelagert ist. Die Innenbaugruppe 30' kann z.B. einen Motor aufweisen, mittels dem eine Drehbewegung des Rollenmantels 10 um die Stange 40 angetrieben werden kann. Alternativ dazu kann die Innenbaugruppe 30' eine Bremse aufweisen.

Eine Drehkraft der Innenbaugruppe 30' kann auf eine Lagerbaugruppe 20' übertragen werden, die an einem Rollenende der Rolle 3' ausgebildet ist und die einen Rollenboden 23 aufweist. Die Lagerbaugruppe 20' ist mit dem Rollenmantel 10 so gekoppelt, dass eine Drehung der Lagerbaugruppe 20' um die Stange 40 eine Drehung des Rollenmantels 10 bewirkt und umgekehrt.

Die Rolle 3' weist ein Zwischenelement 60 auf, das zwischen der Lagerbaugruppe 20' und der Innenbaugruppe 30' angeordnet ist.

Das Zwischenelement 60 ist im Wesentlichen in Form eines Zahnrads ausgebildet, dass drehbar um die Stange 40 gelagert ist. Das Zwischenelement 60 kann als Puffer zwischen den beiden Baugruppen 20' und 30' ausgebildet sein. Das Zwischenelement 60 weist eine Mehrzahl Zähne 62 auf, genauer gesagt eine gerade Anzahl Zähne 62, die in eine radiale Richtung von der Stange 40 wegweisend ausgebildet sind. Im gezeigten Ausführungsbeispiel weist das Zwischenelement 60 mindestens acht Zähne 62 auf. Zwischen jeweils zwei Zähnen 62 weist das Zwischenelement 60 jeweils einen Eingriff 61 auf. Das Zwischenelement 60 weist genau so viele Eingriffe 61 auf wie Zähne 62, z.B. jeweils eine gerade Anzahl von Zähnen 62 und Eingriffen 61.

**Figur 8** zeigt in einer perspektivischen Ansicht das Rollenende der Rolle 3', an dem die Lagerbaugruppe 20' angeordnet ist, und zwar ohne Rollenmantel 10. Die Innenbaugruppe 30' weist Steckfortsätze 33' auf, die parallel zur Stange 40 ausgerichtet an einem Ende der Innenbaugruppe 30' aus der Innenbaugruppe 30' herausragen und von der Innenbaugruppe 30' weg in Richtung zur Lagerbaugruppe 20' weisen. Analog dazu weist die Lagerbaugruppe 20' Steckfortsätze 21' auf, die parallel zur Stange 40 ausgerichtet an einem Ende der Lagerbaugruppe 20' aus der Lagerbaugruppe 20' herausragen und von der Lagerbaugruppe 20' weg in Richtung zur Innenbaugruppe 30' weisen.

Die Steckfortsätze 33' der Innenbaugruppe 30' weisen somit vom Mittelpunkt der Rolle 3' in Richtung zu dem Rollenende der Rolle 3' hin, an dem die Lagerbaugruppe 20' angeordnet ist. Die Steckfortsätze 33' der Innenbaugruppe 30' greifen dabei in einige der Eingriffe 61 des Zwischenelements 60 ein, im gezeigten Ausführungsbeispiel in jeden zweiten Eingriff 61.

Die Steckfortsätze 21' der Lagerbaugruppe 20' weisen von dem Rollenende der Rolle 3' aus, an dem die Lagerbaugruppe 20' angeordnet ist, zum Mittelpunkt der Rolle 3' hin. Die Steckfortsätze 21' der Lagerbaugruppe 20' greifen dabei in einige der Eingriffe 61 des Zwischenelements 60 ein, im gezeigten Ausführungsbeispiel in jeden zweiten Eingriff 61.

Hierbei greifen die Steckfortsätze 21' der Lagerbaugruppe 20' genau in die Eingriffe 61 des Zwischenelements 60 ein, in die die Steckfortsätze 33' der Innenbaugruppe 30' nicht eingreifen.

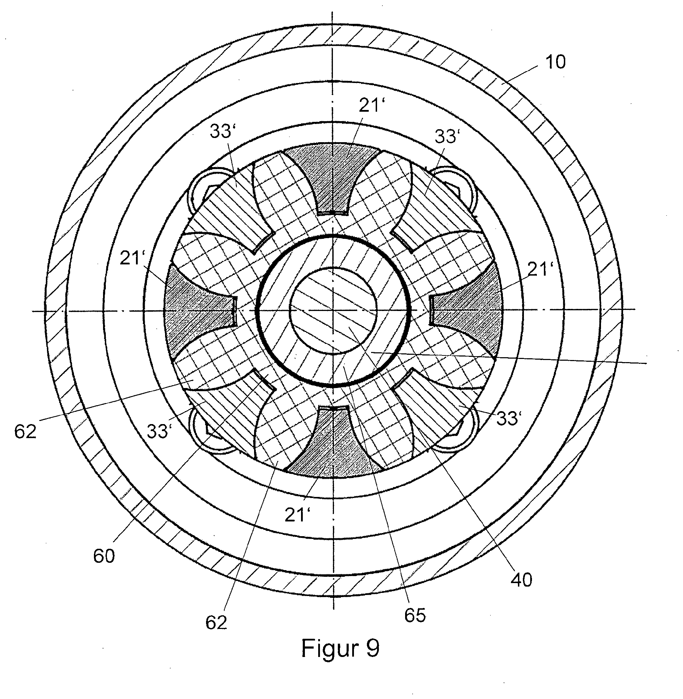

**Figur 9** zeigt einen Querschnitt durch das Zwischenelement 60 der Rolle 3'. Dabei greift jeweils abwechselnd entweder ein Steckfortsatz 21' der Lagerbaugruppe 20' oder ein Steckfortsatz 33' der Innenbaugruppe 30' in die Eingriffe des Zwischenelements 60 ein. Hierbei sind die Steckfortsätze 21' und 33' der beiden Baugruppen 20' und 30' durch jeweils einen Zahn 62 voneinander getrennt.

In dem in Figur 9 gezeigten Querschnitt ist gezeigt, dass die Querschnittsformen der Steckfortsätze 21' und 33' an die Querschnittsformen der Zähne 62 so angepasst sind, dass die Steckfortsätze 21' und 33' die Eingriffe 61 im Wesentlichen vollständig bis zu den Zahnspitzen der Zähne 62 ausfüllen.

In dem gezeigten Ausführungbeispiel weist die Innenbaugruppe 30' mindestens vier Steckforsätze 33' auf, und die Lagerbaugruppe 20' ebenfalls mindestens vier Steckforsätze 21'. Dies ermöglicht eine besonders sichere und mechanisch stabile Verzahnung der beiden Baugruppen 20' und 30' zur Kraftkopplung, und gewährleistet zusätzlich eine hinreichende Verkippbarkeit der Baugruppen 20' und 30' zueinander.

Das Zwischenelement 60 kann über ein Lager 65 drehbar um die Stange 40 so gelagert sein, dass es die Drehbewegung der Innenbaugruppe 30' und der Lagerbaugruppe 20' mitmacht.

Das Zwischenelement 60 kann aus einem elastischen Kunststoff ausgebildet sein, der ohne zu brechen verformbar ausgebildet ist. Dazu kann das Zwischenelement 60 aus einem Weichkunststoff ausgebildet sein.

Wie in Figur 7 gezeigt, kann das Zwischenelement 60 so geformt sein, das es an dem der Innenbaugruppe 30' zugewandten Ende einen luftgefüllten Freiraum 64 zwischen seiner Lagerung an der Stange 40 (also z.B. dem Lager 65) und dem Zwischenelement 60 frei lässt. Der Freiraum 64 ist dabei im Wesentlichen ringförmig ausgebildet und um die Stange 40 herum angeordnet. Zusammen mit der elastischen Ausbildung des Zwischenelement 60 erlaubt und/oder ermöglicht dieser Freiraum 64 ein Verkippen des Zwischenelements 60 relativ zur Stange 40. Dadurch können die ineinander verzahnten Baugruppen 20' und 30' relativ zueinander verkippen, wie bereits voranstehend beschrieben, z.B. im Zusammenhang mit der Rolle 3 und den Figuren 3A bis 6.

Das Zwischenelement 60 kann auch an seinem der Lagerbaugruppe 20' zugewandten Ende einen solchen Freiraum 64 aufweisen, der ein Verkippen in die Gegenrichtung ermöglicht und/oder erlaubt. Das Zwischenelement 60 kann also lediglich an seiner Mitte, durch die der in Figur 9 gezeigte Querschnitt verläuft, bis an das Lager 65 hin reichend ausgebildet sein und an seinen den beiden gegenüberliegenden Baugruppen 20' und 30' zugewandten Enden jeweils den Freiraum 64 ausbilden.

### Bezugszeichenliste

- D: Drehrichtung
- L: Längsachse
- R: Radialrichtung
- 1: Förderanlage
- 2: Gestell
- 3: Rolle
- 3': Rolle
- 4: Gut
- 10: Rohrmantel
- 11: Längsende des Rohrmantels
- 20: Lagerbaugruppe
- 20': Lagerbaugruppe
- 21: Aufnahme
- 21': Steckfortsatz
- 21A: gebogener Anschlag
- 21B: strahlförmiger Anschlag
- 22: Dichtung
- 23: Rollenboden
- 24: Lager
- 30: Innenbaugruppe
- 30': Innenbaugruppe
- 31: der Lagerbaugruppe zugewandtes Ende der Innenbaugruppe
- 32: von der Lagerbaugruppe abgewandtes Ende der Innenbaugruppe
- 33: Steckfortsatz
- 33': Steckfortsatz
- 35: Wirbelstrombremse
- 36: Wirbelstromaufnehmer
- 36A: erstes Wirbelstromaufnehmerlager
- 36B: zweites Wirbelstromaufnehmerlager
- 37: Magnet
- 37A: Magnetkartusche
- 38: Abschirmrohr
- 39: Block
- 40: Stange
- 50: Halbmondring
- 60: Zwischenelement
- 61: Eingriff
- 62: Zähne
- 64: Freiraum
- 65: Lager

## Patentansprüche

1. Rolle (3; 3') mit
- einer ortsfesten Stange (40), die entlang einer Längsachse (L) der Rolle (3; 3') angeordnet ist,
- einem um die Stange (40) herum angeordneten rohrförmigen Rollenmantel (10),
- zumindest einer an der Stange (40) angeordneten Lagerbaugruppe (20; 20'), über die der Rollenmantel (10) drehbar um die Längsachse (L) der Rolle (3; 3') gelagert ist und
- einer Innenbaugruppe (30; 30'), die innerhalb des Rollenmantels (10) an der Stange (40) angeordnet ist und die über die Lagerbaugruppe (20; 20') formschlüssig so mit dem Rollenmantel (10) gekoppelt ist, dass bei Drehung des Rollenmantels (10) ein Kraftaustausch erfolgt zwischen der Innenbaugruppe (30; 30') und dem Rollenmantel (10);
**dadurch gekennzeichnet, dass** die Innenbaugruppe (30; 30') mit einem der Lagerbaugruppe (20; 20') zugewandten Ende (31) so an die Lagerbaugruppe (20; 20') gekoppelt ist, dass die Innenbaugruppe (30; 30') relativ zur Lagerbaugruppe (20; 20') verkippbar ist, ohne die Kraftkopplung der Innenbaugruppe (30; 30') an die Lagerbaugruppe zu unterbrechen und/oder abzuschwächen.

2. Rolle nach Anspruch 1, wobei die relative Verkippung eine Bewegung eines der Lagerbaugruppe (20; 20') abgewandten Endes (32) der Innenbaugruppe (30; 30') radial (R) nach außen beinhaltet.

3. Rolle nach Anspruch 1 oder 2, wobei
- die Innenbaugruppe (30) über eine Steckverbindung mit der Lagerbaugruppe (20) gekoppelt ist,
- die Innenbaugruppe (30) und die Lagerbaugruppe (20) eine erste Baugruppe und eine zweite Baugruppe bereitstellen,
- die erste Baugruppe zumindest einen Steckfortsatz (33) aufweist,
- die zweite Baugruppe zumindest eine Aufnahme (21) für den Steckfortsatz (33) aufweist und
- die Steckverbindung durch Einstecken des Steckfortsatzes (33) in die Aufnahme (21) in Erstreckungsrichtung der Längsachse (L) bereitstellbar ist.

4. Rolle nach Anspruch 3, wobei die Aufnahme (21) so groß ausgebildet ist, dass der Steckfortsatz (33) in der Aufnahme (21) ein Spiel in radialer Richtung (R) aufweist.

5. Rolle nach Anspruch 4, wobei das Spiel in radialer Richtung (R) zumindest ¼ Millimeter groß ausgebildet ist.

6. Rolle nach einem der Ansprüche 1 oder 2, wobei die Innenbaugruppe (30') an dem der Lagerbaugruppe (20') zugewandten Ende (31) Steckfortsätze (33') aufweist, die in Steckfortsätze (21') an einem der Innenbaugruppe (30') zugewandten Ende der Lagerbaugruppe (20) eingreifen.

7. Rolle nach Anspruch 6, wobei sowohl die Steckfortsätze (33') der Innenbaugruppe (30') als auch die Steckfortsätze (21') der Lagerbaugruppe (20') in Eingriffen (61) eines Zwischenelements (60) angeordnet sind.

8. Rolle nach Anspruch 7, wobei das Zwischenelement (60) aus einem elastischen Kunststoff ausgebildet ist, drehbar um die Stange (40) gelagert ist, und/oder verkippbar relativ zur Stange (40) gelagert ist.

9. Rolle nach einem der vorangegangenen Ansprüche, wobei die Innenbaugruppe (30; 30') als Wirbelstrombremse mit zumindest einem ortsfesten Magneten (37) und einem um die Stange (40) drehbar gelagerten Wirbelstromaufnehmer (36) ausgebildet ist, wobei der Wirbelstromaufnehmer (36) und der Magnet (37) radial beabstandet voneinander angeordnet sind.

10. Rolle nach Anspruch 9, wobei zwischen dem Wirbelstromaufnehmer (36) und dem Rollenmantel (10) ein ferromagnetisches Abschirmrohr (38) angeordnet ist, das sowohl radial beabstandet zum Rollenmantel (10) als auch radial beabstandet zum Wirbelstromaufnehmer (36) angeordnet ist.

11. Rolle nach Anspruch 9 oder 10, wobei der Wirbelstromaufnehmer (36) rohrförmig ausgebildet ist und an zumindest zwei in Erstreckungsrichtung der Längsachse (L) voneinander beabstandeten Stellen drehbar um die Stange (40) gelagert ist.

12. Rolle nach einem der Ansprüche 1 bis 8, wobei die Innenbaugruppe (30; 30') einen Motor zum Antreiben einer Drehbewegung des Rollenmantels (10) um die Stange (40) herum aufweist.

13. Rolle nach einem der vorangehenden Ansprüche, wobei die Lagerbaugruppe (20; 20') als Rollenboden (23) ausgebildet ist oder einen Rollenboden (23) aufweist, und wobei der Rollenmantel (10) mit einem seiner Längsenden an der Lagerbaugruppe (20; 20') gelagert ist.

14. Förderanlage (1) mit einem ortsfesten Gestell (2), in dem eine Rolle (3; 3') nach einem der vorangegangenen Ansprüche angeordnet ist, wobei die Stange (40) der Rolle (3; 3') ortsfest am Gestell (2) befestigt ist.

## Claims

1. A roller (3; 3') with
- an immovable rod (40) that is arranged along a longitudinal axis (L) of the roller (3; '3'),
- a tubular roller shell (10) arranged around the rod (40),
- at least one bearing assembly (20; 20'), arranged on the rod (40) over which the roller shell (10) is rotatably mounted about the longitudinal axis (L) of the roller (3; 3'), and
- an inner assembly (30; 30') that is arranged within the roller shell (10) on the rod (40) and that is coupled by the bearing assembly (20; 20') in a form-fit to the roller shell (10) so that, when the roller shell (10) rotates, there is an exchange of force between the inner assembly (30; 30') and the roller shell (10); **characterized in that**
the inner assembly (30; 30') is coupled to the bearing assembly (20; 20') by an end (31) facing the bearing assembly (20; 20') such that the inner assembly (30; 30') can be tilted relative to the bearing assembly (20; 20') without interrupting and/or weakening the coupling of force from the inner assembly (30; 30') to the bearing assembly.

2. The roller according to claim 1, wherein the relative tilt contains a movement radially (R) to the outside of an end (32) of the inner assembly (30; 30') facing away from the bearing assembly (20; 20').

3. The roller according to claim 1 or 2, wherein
- the inner assembly (30) is coupled to the bearing assembly (20) by means of a plug-in connection,
- the inner assembly (30) and the bearing assembly (20) provide a first assembly and a second assembly,
- the first assembly has at least one plug-in extension (33),
- the second assembly has at least one receptacle (21) for the plug-in extension (33), and
- the plug-in connection can be provided by inserting the plug-in extension (33) into the receptacle (21) in the direction of extension of the longitudinal axis (L).

4. The roller according to claim 3, wherein the receptacle (21) is designed large enough for the plug-in extension (33) to have play in a radial direction (R) in the receptacle (21).

5. The roller according to claim 4, wherein the play in a radial direction (R) is configured to be at least 1/4 mm.

6. The roller according to one of claims 1 or 2, wherein the inner assembly (30') has plug-in extensions (33') on the end (31) facing the bearing assembly (20') that engage in the plug-in extensions (21') on an end of the bearing assembly (20) facing the inner assembly (30').

7. The roller according to claim 6, wherein both the plug-in extensions (33') of the inner assembly (30') as well as the plug-in projections (21') of the bearing assembly (20') are arranged in engaging means (61) of an intermediate element (60).

8. The roller according to claim 7, wherein the intermediate element (60) is made of an elastic plastic, is rotatably mounted around the rod (40), and/or can be tilted relative to the rod (40).

9. The roller according to one of the preceding claims, wherein the inner assembly (30; 30') is designed as an eddy-current brake with at least one stationary magnet (37) and an eddy current sensor (36) rotatably mounted around the rod (40), wherein the eddy current sensor (36) and the magnet (37) are arranged at a radial distance from each other.

10. The roller according to claim 9, wherein a ferromagnetic shielding tube (38) is arranged between the eddy current sensor (36) and the roller shell (10), and is arranged both at a radial distance from the roller shell (10) as well as at a radial distance from the eddy current sensor (36).

11. The roller according to claim 9 or 10, wherein the eddy current sensor (36) is designed tubular, and is rotatably mounted around the rod (40) at at least two locations at a distance from each other in the direction of extension of the longitudinal axis (L).

12. The roller according to one of claims 1 to 8, wherein the inner assembly (30; 30') has a motor for driving a rotary movement of the roller shell (10) around the rod (40).

13. The roller according to one of the preceding claims, wherein the bearing assembly (20;20') is designed as a roller end (23), or has a roller end (23), and wherein the roller shell (10) is mounted by one of its longitudinal ends to the bearing assembly (20; 20').

14. A delivery system (1) with an immovable frame (2) in which a roller (3; 3') is arranged according to one of the preceding claims, wherein the rod (40) of the roller (3; 3') is fixedly fastened to the frame (2).

## Revendications

1. Rouleau (3 ; 3') comprenant
- une tige fixe (40), qui est disposée le long d'un axe longitudinal (L) du rouleau (3 ; 3'),
- une jupe de rouleau (10) tubulaire, disposée tout autour de la tige (40),
- au moins un ensemble palier (20 ; 20') disposé sur la tige (40), au moyen duquel la jupe de rouleau (10) est montée de manière à pouvoir pivoter autour de l'axe longitudinal (L) du rouleau (3 ; 3') et
- un ensemble intérieur (30 ; 30'), qui est disposé à l'intérieur de la jupe de rouleau (10) sur la tige (40) et qui est couplé à la jupe de rouleau (10) via l'ensemble palier (20 ; 20') par complémentarité de forme, de sorte qu'un transfert d'effort se produit entre l'ensemble intérieur (30 ; 30') et la jupe de rouleau (10) lors de la rotation de la jupe de rouleau (10) ;
**caractérisé en ce que**
l'ensemble intérieur (30 ; 30') est couplé à l'ensemble palier (20 ; 20') par une extrémité (31) tournée vers l'ensemble palier (20 ; 20'), de sorte que l'ensemble intérieur (30 ; 30') peut être incliné par rapport à l'ensemble palier (20 ; 20') sans interrompre et/ou atténuer le couplage de l'ensemble intérieur (30 ; 30') à l'ensemble palier par transfert d'effort.

2. Rouleau selon la revendication 1, dans lequel l'inclinaison relative comporte un mouvement radial (R) vers l'extérieur d'une extrémité (32) de l'ensemble intérieur (30 ; 30') tournée à l'opposé de l'ensemble palier (20 ; 20').

3. Rouleau selon la revendication 1 ou 2, dans lequel
- l'ensemble intérieur (30) est couplé à l'ensemble palier (20) par l'intermédiaire d'un raccord emboîtable,
- l'ensemble intérieur (30) et l'ensemble palier (20) mettent à disposition un premier ensemble et un second ensemble,
- le premier ensemble présente au moins un prolongement emboîtable (33),
- le second ensemble présente au moins un logement (21) accueillant le prolongement emboîtable (33) et
- le raccord emboîtable peut être mis à disposition en insérant le prolongement emboîtable (33) à l'intérieur du logement (21) dans la direction d'extension de l'axe longitudinal (L).

4. Rouleau selon la revendication 3, dans lequel le logement (21) est conçu de manière à être si grand que le prolongement emboîtable (33) présente un jeu en direction radiale (R) dans le logement (21).

5. Rouleau selon la revendication 4, dans lequel le jeu en direction radiale (R) est conçu de manière à atteindre au moins ¼ de millimètre.

6. Rouleau selon l'une des revendications 1 ou 2, dans lequel l'ensemble intérieur (30') présente des prolongements emboîtables (33') à l'extrémité (31) tournée vers l'ensemble palier (20'), qui s'engagent dans des prolongements emboîtables (21') à une extrémité de l'ensemble palier (20) tournée vers l'ensemble intérieur (30').

7. Rouleau selon la revendication 6, dans lequel tant les prolongements emboîtables (33') de l'ensemble intérieur (30') que les prolongements emboîtables (21') de l'ensemble palier (20') sont disposés dans les engrènements (61) d'un élément intermédiaire (60).

8. Rouleau selon la revendication 7, dans lequel l'élément intermédiaire (60) est constitué d'une matière plastique élastique, il est monté de manière à pouvoir pivoter autour de la tige (40) et/ou à pouvoir être incliné par rapport à la tige (40).

9. Rouleau selon l'une des revendications précédentes, dans lequel l'ensemble intérieur (30 ; 30') est conçu sous la forme d'un frein à courants de Foucault pourvu d'au moins un aimant fixe (37) et d'un capteur à courants de Foucault (36) monté de manière à pouvoir pivoter autour de la tige (40), dans lequel le capteur à courants de Foucault (36) et l'aimant (37) sont disposés radialement à distance l'un de l'autre.

10. Rouleau selon la revendication 9, dans lequel un tube de blindage ferromagnétique (38) est disposé entre le capteur à courants de Foucault (36) et la jupe de rouleau (10), lequel est disposé radialement tant à distance de la jupe de rouleau (10) qu'à distance du capteur à courants de Foucault (36).

11. Rouleau selon la revendication 9 ou 10, dans lequel le capteur à courants de Foucault (36) est conçu sous une forme tubulaire et est monté à au moins deux endroits espacés l'un de l'autre dans la direction d'extension de l'axe longitudinal (L) de manière à pouvoir pivoter autour de la tige (40).

12. Rouleau selon l'une des revendications 1 à 8, dans lequel l'ensemble intérieur (30 ; 30') présente un moteur servant à entraîner un mouvement de rotation de la jupe de rouleau (10) autour de la tige (40).

13. Rouleau selon l'une des revendications précédentes, dans lequel l'ensemble palier (20 ; 20') est conçu sous la forme d'un corps de rouleau (23) ou présente un corps de rouleau (23), et dans lequel la jupe de rouleau (10) est montée sur l'ensemble palier (20 ; 20') par l'une de ses extrémités longitudinales.

14. Convoyeur (1) pourvu d'un châssis fixe (2), dans lequel est disposé un rouleau (3 ; 3') selon l'une des revendications précédentes, la tige (40) du rouleau (3 ; 3') étant attachée fixement au châssis (2).
